# EUROPEAN PATENT SPECIFICATION

(11) **EP 1 058 575 B1**
(45) Date of publication and mention of the grant of the patent: **21.07.2004**
(21) Application number: 98959688.7
(22) Date of filing: 07.12.1998
(51) Int. Cl.: B01D 1/28, B01D 3/00, C02F 1/04

(54) **METHOD AND APPARATUS FOR REMOVING WATER FROM AQUEOUS FLUID MIXTURE**
VERFAHREN UND VORRICHTUNG ZUM ABTRENNEN VON WASSER AUS WÄSSRIGEN FLUIDGEMISCHEN
PROCEDE ET APPAREIL POUR EXTRACTION D'EAU A PARTIR D'UN MELANGE LIQUIDE AQUEUX

(30) Priority: 05.12.1997 CA 2223922
(43) Date of publication of application: 13.12.2000
(73) Proprietor: Inland Technologies Inc., Truro, Nova Scotia B2N 5C1 (CA)
(72) Inventor: GAMMON, Peter, Henry, Firth, St. John's, Newfoundland A1A 4V3 (CA); DINN, Gary, James, Paradise, Newfoundland AIL 1C2 (CA); WHITTEN, John, Joseph, Portugal Cove, Newfoundland A0A 3K0 (CA)
(74) Representative: Phillips, Patricia Marie
(86) International application number: PCT/CA1998/001136
(87) International publication number: WO 1999/029387

(56) References cited:
- EP-A- 0 058 877
- WO-A-97/20606
- CA-A- 2 116 827
- GB-A- 627 838
- US-A- 3 974 023

## Description

### TECHNICAL FIELD

This invention relates to a method and apparatus for removal of diluent water from an aqueous fluid mixture, especially an aqueous organic liquid to increase the concentration of the organic liquid in water.

The invention has particular application in the treatment of diluted spent aircraft deicing fluid to recover the deicing fluid at an acceptable concentration in water.

### BACKGROUND ART

Ice is removed from the wings of aircraft prior to flight, by spraying the wings with a deicing fluid. Typically this deicing fluid is an aqueous solution of ethylene glycol or propylene glycol or a mixture thereof. This solution typically contains about 55%, by weight, of the glycol and 45%, by weight, of water together with minor amounts of additives such as surfactants and inhibitors.

The deicing fluid, also referred to as aircraft deicing fluid (ADF) is recovered from the tarmac where the aircraft deicing is carried out, and typically is scavenged through gravity drains or by vacuum trucks. The recovered ADF is diluted by aqueous precipitation, for example, snow and ice, which it contacts on the surface of the aircraft or on the tarmac, and is also contaminated with various contaminants including dissolved runway deicing salts, grit, traces of fuel and lubricating oils and other debris.

Traditionally the collected material is sorted according to its approximate concentration of glycol and scored in tanks for subsequent processing.

Different: commercial procedures for recovery of the glycol involve filtration, deionization or distillation. Canadian Patent Specification 2,116,827 of A. Viszolay et al describes stripping water away using a packed heated tower and distilling the glycol under vacuum.

Canadian Patent Specification 2,106,358 P. Eastcott et al employs a concentrator having a packing medium of glass shards providing a labyrinth for flow of air in one direction and thin streams of glycol in a generally opposite direction.

Canadian Patent Specification 2,074,031 B. Dobrofsky employs reaction of the water component of diluted spent deicing fluid with an agent such as calcium oxide to form a system in which the glycol is insoluble. U.S. Patent 5,552,023 S. J. Zhou employs a reverse osmosis membrane to achieve a first level of water removal followed by membrane evaporation employing a porous hydrophobic membrane.

Nevertheless, there remains a need for a heat efficient system for recovering the glycol of spent aircraft deicing fluid at a concentration acceptable for re-use of the glycol in an aircraft deicing fluid.

### DISCLOSURE OF THE INVENTION

This invention seeks to provide a method and apparatus for removing diluent water from an aqueous fluid mixture, especially an aqueous organic liquid.

In particular this invention seeks to provide such a method and apparatus for concentrating spent aircraft deicing fluid based on a glycol and water which fluid has become diluted with water.

In accordance with one aspect of the invention there is provided a method of removing diluent water from a spent deicing fluid to provide a re-usable deicing fluid wherein:
a) a spent deicing fluid mixture comprising 5 to 20%, by weight, of a deicing glycol and 80 to 95%, by weight, of water, is heated indirectly with steam in a heating chamber to produce a hot frothing mass of hot liquid and steam vapor phases, said hot liquid phase containing bubbles of steam vapor, at a first pressure,
b) feeding the hot frothing mass from said heating chamber to a separating chamber of a cyclone and separating said steam vapor phase and said bubbles of steam vapor of said hot liquid phase, cyclonically from said hot frothing mass in said separating chamber of said cyclone at said first pressure with formation of a discrete hot liquid phase and a discrete steam vapor phase,
c) recovering said discrete steam vapor phase from said cyclone and compressing said steam vapor phase in at least one compression stage to develop a hot compressed steam at a second pressure,
d) recycling said hot compressed steam for the indirect heating of spent deicing fluid in (a),
e) recovering said discrete hot liquid phase from said cyclone,
f) monitoring the concentration of deicing glycol in said hot liquid phase recovered from the cyclonic separation in (e) and recovering a re-usable deicing fluid having a concentration of deicing glycol of 40 to 50%, by weight, and a concentration of water of 50 to 60%, by weight.

In accordance with another aspect of the invention there is provided an apparatus for removing diluent water from spent deicing fluid to provide a re-usable deicing fluid, the apparatus comprising:
(a) a heat exchanger having a first flow passage therethrough for flow of a spent deicing fluid containing a deicing glycol and diluent water, said first passage being in heat exchange relationship with a second flow passage for steam, said first passage having an inlet port and an outlet port, and said second flow passage having an inlet port and an outlet port;
(b) a separating chamber with a liquid inlet port and a first conduit for liquid flow communication of said outlet port of said first passage with said inlet port; a steam outlet port in said separating chamber and a liquid outlet port communicating with said separating chamber;
(c) at least one compressor for compressing steam having a steam inlet port and a second conduit for steam flow communication of said steam outlet port with said steam inlet port of said at least one compressor; a compressed steam outlet port and a third conduit for steam flow communication of said compressed steam outlet port with said inlet port of said second flow passage of said heat exchanger and means for monitoring the concentration of deicing glycol recovered from liquid outlet port;
   said separating chamber being in a cyclone for cyclonically separating a hot frothing mass of a hot liquid phase and a steam vapor phase with said hot liquid phase containing bubbles of steam vapor received from said first flow passage; and means for maintaining said first flow passage, said first conduit, said separating chamber and said steam outlet port of said cyclone at a pressure below the pressure within said second flow passage of said heat exchanger, said at least one compressor and said third conduit.

### DESCRIPTION OF PREFERRED EMBODIMENTS

The invention is described herein by reference to the preferred embodiment which involves recovery of a reusable aircraft deicer fluid (ADF) from a dilute spent deicer fluid.

The invention exploits a thermodynamic cycle, namely, steam vapor recompression, in conjunction with cyclonic separation with exhaustion of steam vapor in a cyclone concentrator from a hot, frothing liquid mass derived from spent ADF.

ADF typically contains 50 to 60%, by weight, of a deicing glycol, for example, ethylene glycol, propylene glycol or mixtures of such glycols, and 40 to 50%, by weight, of water as well as minor amounts of additives such as surfactants and corrosion inhibitors. Spent ADF recovered from the tarmac and diluted with aqueous precipitate which it contacts on the surface of the aircraft, during deicing operations, and subsequently on the tarmac contains 5 to 20%, by weight, more usually 10 to 12%, by weight, of glycol; and 80 to 95%, by weight, more usually 88 to 90%, by weight, of water.

The method and apparatus of the invention provide an energy efficient route for recovery from the spent ADF of an aqueous solution of the glycol having a concentration of the glycol comparable with that of ADF, i.e., 50 to 60%, by weight, glycol and 40 to 50%, by weight, water, and clean water with a very low content of glycol. The ability to recover a clean water with low content of glycol is especially important when the water is to be sewered through municipal sewer systems where standards of cleanliness may apply because of environmental concerns.

The method and apparatus are operated with most of the system including the first flow passage of the heat exchanger, the cyclonic concentrator and the steam exhaust line under a first pressure which typically is below atmospheric pressure, for example, 75.84x10³ to 103.42x10³ N/m² (11 to 15 psia), but with the second flow passage of the heat exchanger, the at least one compressor and the steam line from the compressor to the second flow passage under a second pressure which is above the first pressure, and typically above atmospheric pressure. Typically the first pressure is at least 34.47x10³ N/m² (5 psi) below the second pressure; the second pressure being for example, 110.31x10³ to 137.89x10³ N/m² (16 to 20 psia). In particular the first pressure is such as to create a vacuum or partial vacuum effect in the first flow passage, the cyclonic concentrator and steam exhaust line from the cyclonic separator relative to the steam system comprising the second flow passage, the at least one compressor and the steam line from the at least one compressor to the second flow passage.

When a solution based on water and a water miscible organic liquid in which the organic liquid has the higher boiling temperature is heated to boiling, a hot frothing mass is produced which comprises a hot liquid phase comprising the hot water-miscible organic liquid and a vapor phase predominantly of steam with a small amount of vapor of the water-miscible organic liquid, the vapor phase may be partially separated from the hot liquid phase of the frothing mass but may also be present as vapor bubbles in such hot liquid phase. The vapor bubbles do not readily separate from the hot liquid phase.

In the method of the invention che hot frothing mass of aqueous glycol and steam is formed in a plate heat exchanger at a first pressure and is delivered at such first pressure co a cyclonic separator maintained at the first pressure. Cyclonic separation of the steam bubbles within the frothing liquid mass proceeds efficiently in the reduced pressure environment of the cyclone separator. The reduced pressure also serves to exhaust the vapor phase of the hot mass from the cyclone concentrator into the steam line to the compressor stage, which is at a higher pressure, which steam line is also under the reduced pressure relative to the steam system.

Thus a hot frothing mass of the liquid and vapor phases is formed in the plate heat exchanger at a first pressure below atmospheric pressure and the hot frothing mass of the liquid and vapor phases is delivered from the plate heat exchanger to the cyclonic separator which is maintained at such first pressure.

The steam vapor together with a small amount of glycol vapor is cyclonically separated from the hot frothing mass as a vapor phase, and is exhausted from the cyclone concentrator to the compression stage, leaving behind a hot liquid phase of reduced water content. In this way the dilute spent ADF is concentrated. The hot liquid phase can be recycled back to the plate heat exchanger until a desired concentration of the glycol is achieved.

The higher pressure of the steam in the second flow passage of the plate heat exchanger provides a steam having a temperature effective to heat the spent ADF in the first flow passage to the boiling temperature of the spent ADF to produce the hot frothing mass of the aqueous glycol and steam, above a hot liquid phase of spent ADF. The hot frothing mass has the same proportions of glycol and water, in vapor or liquid form, as in the hot liquid phase.

In the continuous operation of the method a level of the hot liquid phase is maintained in the plate heat exchanger for continuous development of the hot frothing mass, the separation of the hot frothing mass into the discrete vapor and liquid phases is carried out in the cyclone.

The steam vapor exhausted from the cyclone concentrator is compressed in the compression stage with compressors or blowers. The compressed steam produced is desuperheated with hot distillate or condensate formed by the condensation of steam in the plate heat exchanger and the desuperheated compressed steam at the second pressure is cycled from the compression stage as steam input providing the condensing phase in the plate heat exchanger, heat being transferred from the compressed steam to the dilute spent ADF.

Provision is made to recycle condensate formed in the compression of the steam in the compressor stage, and a portion of the steam exhausted from the cyclone concentrator and which may contain a small amount of glycol vapor back to the cyclone concentrator to enhance the separation of a water component free of or containing only a small amount of glycol from the aqueous glycol reusable as ADF, and also to enhance the glycol recovery.

The hot concentrate of glycol and water recovered from the cyclone separator is employed to preheat diluted spent ADF prior to delivery of the diluted spent ADF to the plate exchanger. The hot steam distillate or condensate from the plate heat exchanger is also employed to preheat the diluted spent ADF. A preheating heat exchanger employs separate flows of the recovered hot concentrate of glycol and water, and the hot steam condensate in heat exchange counter-current flow with the diluted spent ADF.

The diluted spent ADF prior to being preheated is filtered with filters of conventional type to remove contaminants, for example, mechanical filter bed systems may be employed to remove grit and other solid particles from the liquid phase and activated charcoal beds may be employed to remove water-immiscible liquids, for example, hydrocarbon oils.

### BRIEF DESCRIPTION OF DRAWINGS

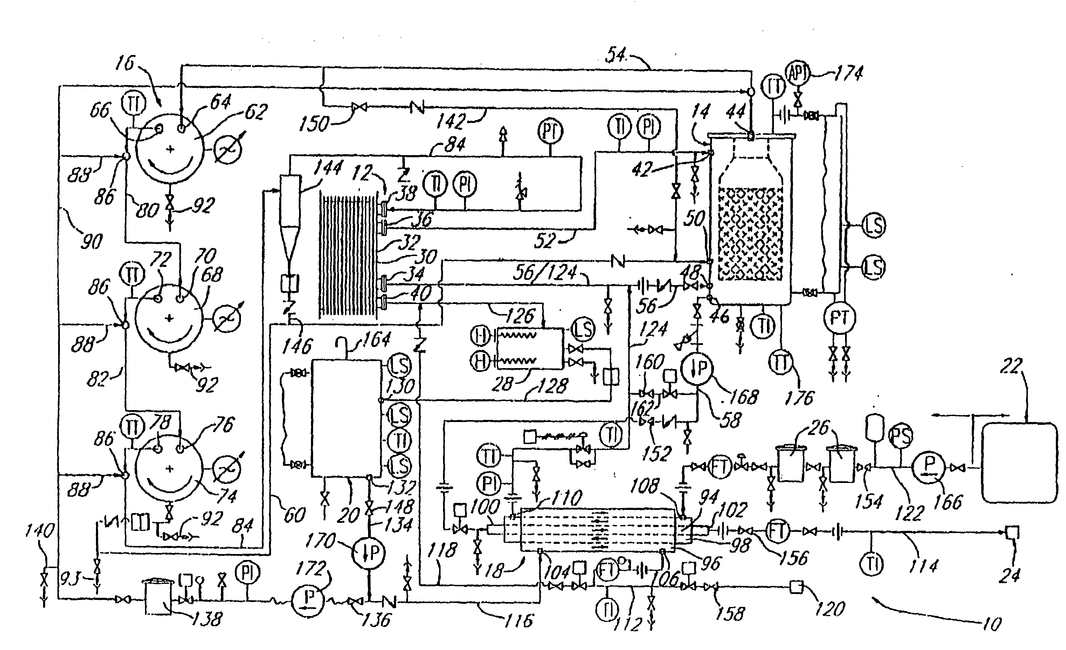

FIG. 1 is a schematic representation of a aircraft deicing fluid recovery apparatus of the invention.

### DESCRIPTION OF PREFERRED EMBODIMENTS WITH REFERENCE TO THE DRAWINGS

With further reference to Fig. 1, an aircraft deicing fluid recovery apparatus 10 includes a plate heat exchanger 12, a cyclone concentrator 14, a compressor assembly 16, a preheating heat exchanger 18, a distillate tank 20, a recovery tank 22 providing a source of spent aircraft deicer fluid, a concentrate tank 24, filters 26 and an electrical heater 28.

Plate heat exchanger 12 includes a flow passage 30 for spent aircraft deicing fluid containing diluent water and a flow passage 32 for steam, the flow passage 30 being in heat exchange relationship with the flow passage 32.

Flow passage 30 includes inlet port 34 for the spent fluid and outlet port 36 for a hot frothing mass of liquid deicing fluid mixed with bubbles of steam vapor. Flow passage 32 includes an inlet port 38 for steam and an outlet port 40 for condensed steam.

Cyclone concentrator 14 includes an inlet port 42 for the hot liquid/steam mass, an outlet port 44 for steam, an outlet port 46 for hot deicing fluid, a recycling outlet port 48 for hot deicing fluid and an inlet port 50 for distillate which may contain deicing fluid glycol.

A conduit 52 provides liquid flow connection between outlet port 36 of plate heat exchanger 12 and inlet port 42 of cyclone concentrator 14.

A conduit 54 provides steam flow communication between the steam outlet port 44 of cyclone concentrator 14 and the compressor assembly 16.

A recycle conduit 56 provides liquid flow communication between recycling outlet port 48 of cyclone concentrator 14 and inlet port 34 of plate heat exchanger 12.

Outflow conduit 58 provides liquid flow communication between outlet port 46 of cyclone concentrator 14 and pre-heating heat exchanger 18.

Conduit 60 provides liquid flow communication between compressor assembly 16 and the distillate inlet port 50.

Compressor assembly 16 includes compressors 62, 68 and 74.

Compressor 62 has an inlet port 64 for steam and an outlet port 66 for compressed steam. Compressor 68 has an inlet port 70 for compressed steam from compressor 62 and an outlet port 72 for compressed steam which has been subjected to further compression. Compressor 74 has an inlet port 76 for the compressed steam from compressor 68 and an outlet port 78 for the final compressed steam.

Steam line 80 provides steam flow communication between outlet port 66 of compressor 62 and inlet port 70 of compressor 68. Steam line 82 provides steam flow communication between outlet port 72 of compressor 68 and inlet port 76 of compressor 74. Steam line 84 provides steam flow communication between outlet port 78 of compressor 74 and steam inlet port 38 of plate heat exchanger 12.

Each of compressors 62, 68 and 74 has a desuperheating inlet port 86, each of which inlet ports 86 is in liquid flow communication with a branch line 88 from a hot distillate line 90.

Each of compressors 62, 68 and 74 has a drain line 92 and a drain line 93 is provided from distillate conduit 60.

Preheating heat exchanger 18 has a cencral conduit 94, an outer annular conduit 96 and an intermediate annular conduit 98. Intermediate annular conduit 98 circumscribes central conduit 94 and outer annular conduit 96 circumscribes intermediate annular conduit 98.

Intermediate annular conduit 98 is in heat exchange relationship with central conduit 94 and outer annular conduit 96.

Central conduit 94 has an inlet port 100 and an outlet port 102. Outer annular conduit 96 has an inlet port 104 and an outlet port 106 and intermediate annular conduit 98 has an inlet port 108 and an outlet port 110.

Conduit 114 provides flow communication between outlet port 102 of central conduit 94 and concentrate tank 24.

Conduit 116 provides flow communication between distillate tank 20 and inlet port 104 of outer annular conduit 96.

Conduit 118 provides flow communication between outlet port 106 of outer annular conduit 96 and electrical heater 28.

A branch line 112 from conduit 118 connects to a sewer 120.

Conduit 122 provides a liquid flow communication between the recovery tank 22 and inlet port 108 of intermediate annular conduit 98.

Conduit 124 provides liquid flow communication between outlet port 110 of intermediate annular conduit 98 and inlet port 34 of plate heat exchanger 12.

Conduit 126 provides liquid flow communication between outlet port 40 of plate heat exchanger 12 and electrical heater 28 and conduit 128 provides liquid flow communication between electrical heater 28 and distillate tank 20.

Distillate tank 20 has an inlet port 130 and an outlet port 132. A line 134 provides liquid flow communication between outlet port 132 with conduit 116 and hot distillate line 90.

A valve 136 in line 90 controls flow from line 134 between line 90 and conduit 116. Filter 138 is disposed in line 90 as is a drain line 140.

A hot distillate line 90 feeds hot distillate to steam line 54 to desuperheat the steam entering compressor 62. The distillate introduced into steam line 54 from distillate line 90 also serves to extract from the steam vapor, glycol vapor which has been entrained by the steam vapor.

A steam recycle conduit 142 provides flow communication between steam line 54 and distillate conduit 60 to distillate inlet port 50.

A secondary cyclone 144 is disposed in steam line 84. Secondary cyclone 144 has a distillate line 146 providing flow communication between the secondary cyclone 144 and distillate conduit 60.

Valves are disposed throughout apparatus 10 for control of flow, including prevention of flow in various lines and conduits, including valve 148 in line 134, valve 150 in stream recycle conduit 142, valve 152 in outflow conduit 58, valve 154 in conduit 122, valve 156 in conduit 114, valve 158 in branch 112 to sewer 120 and valve 160 in branch line 162 from outflow conduit 58 to conduit 124.

Distillate tank 20 includes a vent line 164.

The apparatus 10 includes several pumps for flow of liquids through apparatus 10 under pressure including pump 166 in conduit 122, pump 168 in outflow conduit 58, pump 170 in line 134 and pump 172 in hot distillate line 90.

An absolute pressure transmitter or monitor 174 and a temperature transmitter or monitor 176, monitor the pressure and temperature, respectively in the cyclone concentrator 14. Based on tabulated data the concentration of glycol in the discrete hot liquid phase in cyclone concentrator 14 is determined. The tabulated data provides the concentration of glycol in the discrete hot liquid for given values of pressure and temperature in the cyclone 14 for a given glycol concentration in the feed to flow passage 30 of plate heat exchanger 12.

This tabulated data may be stored in memory in a computer (not shown), the values of pressure and temperature are fed constantly to the computer together with the glycol concentration of the feed to flow passage 30 of plate heat exchanger 12 whereby the concentration of glycol in the discrete liquid phase in cyclone concentrator 14 is computed on an ongoing basis.

Operation of the apparatus 10 to concentrate spent aircraft deicing fluid by removal of diluent water proceeds as follows: the spent diluted deicing fluid is pumped from recovery tank 22 to plate heat exchanger 12 by pump 166. The spent fluid flows through conduit 122 and fillers 26 (two of which are shown) to preheating heat exchanger 18 where it enters at inlet port 108 flowing along intermediate annular conduit 98 to outlet port 110. In preheating heat exchanger 18, the dilute spent fluid flowing along intermediate annular conduit 98 is in countercurrent flow and heat exchange relationship with hot concentrated deicer fluid flowing along central conduit 94 and hot steam condensate flowing along outer annular conduit 96 of preheating heat exchanger 18.

In this way the dilute spent deicer fluid is preheated.

The preheated dilute spent deicer fluid flows from outlet port 110 of preheating heat exchanger 18 along conduit 124 to inlet port 34 and thence along flow passage 30 of plate heat exchanger 12 at a first pressure, preferably under partial vacuum. At the same time, steam is fed through inlet port 38 into flow passage 32 of plate heat exchanger 12 at a second pressure higher than the first pressure. The steam in flow passage 32 condenses and as it condenses heats the dilute spent deicer fluid in flow passage 30 producing a hot, boiling, foaming mass of the spent deicer fluid and steam which exits plate heat exchanger 12 at outlet port 36 and flows along conduit 52 entering cyclone concentrator 14 at inlet port 42.

A level of hot liquid is maintained in the flow passage 30, this hot liquid contains the same proportions of glycol and water as in the hot frothing mass. As the hot liquid is converted to hot frothing mass and delivered to the cyclone concentrator 14, it is replenished by the feed of spent deicer fluid from the preheating heat exchanger 18.

The steam introduced through steam inlet port 38 to flow passage 32 is compressed or recompressed steam at elevated pressure, for example, 34.47 N/m² (5 psi) above the first pressure (in flow passage 30), which steam condenses at its equilibrium temperature of 109°C. The boiling point of the glycol deicer fluid would be higher than the steam temperature if the pressures were equal, but the differential in pressure causes the steam to be hotter making the heat flow from the steam in flow passage 32 to the spent deicer liquid in flow passage 30, as the steam condenses in flow passage 32.

In the cyclone concentrator 14, steam vapor is separated from hot liquid deicer fluid. The liquid deicer fluid being drawn to the lower region of the cyclone concentrator 14 and the steam being exhausted from the upper region through outlet port 44.

The steam vapor flows from outlet port 44 along conduit 54 to compressor assembly 16. Conduit 54, outlet port 44 and the interior of cyclone concentrator 14 are maintained at the first pressure which typically is a partial vacuum at a pressure below atmospheric pressure.

The steam is thus exhausted from cyclone concentrator 14 along conduit 54 and passes sequentially through compressors 62, 68 and 74 where it is subjected to successive compression. Compressed steam exits compressor assembly 16 at outlet port 78 and flows along steam line 84 to inlet port 38 of plate heat exchanger 12. Secondary cyclone 144 in steam line 84 serves to separate condensed steam and entrained glycol deicer fluid which is withdrawn through distillate line 146 to distillate conduit 60 and is recycled to cyclone 14 for recovery of the glycol content.

In compressor assembly 16, hot distillate or condensate removed from plate heat exchanger 12 at outlet port 40 is fed from hot distillate line 90 along branch lines 88 to a desuperheating inlet port 86 associated with each of lines 80, 82 and 84. This water enters the flow of compressed steam and desuperheats the compressed steam to maintain the temperature within the required limits of operation of the compressors 62, 68 and 74 and converts the heat of compression and friction heat developed by the compressors into latent heat held by the steam. Any excess desuperheating water retained in the compressed steam is removed by the secondary cyclone 144 as described hereinbefore. Water accumulated in the compressors 62, 68 and 74 is removed at the drains 92 and a portion of the final water discharged from compressor 74 is fed along distillate conduit 60 to distillate inlet port 50 of cyclone concentrator 14 whereby residual glycol deicer fluid entrained in the steam removed through conduit 54 from cyclone concentrator 14 may be recovered.

A portion of the steam passing along conduit 54 from cyclone concentrator 14 to compressor assembly 16 is recycled to cyclone concentrator 14 along steam recycle conduit 142, also as a means of returning to the cyclone concentrator 14 the small amounts of glycol deicing fluid entrained in the steam withdrawn from cyclone concentrator 14.

The concentrated deicer fluid exits cyclone concentrator 14 at outlet port 46 and is pumped by pump 168 along outflow conduit 58 to inlet port 100 of the central conduit 94 of preheating heat exchanger 18 where it flows in counter current flow with the dilute spent deicer fluid to be treated, the heat of the concentrated deicer fluid being employed to preheat the dilute spent deicer fluid. The concentrated deicer fluid flows from preheating heat exchanger 18 through outlet port 102 and along conduit 114 to concentrate tank 24. The concentration of the concentrated deicer fluid in cyclone concentrator 14 is monitored.

The flow of concentrated deicer fluid in outflow conduit 58 is controlled by valve 152 in response to the concentration of glycol determined from the pressure and temperature (determined by monitors 174 and 176, respectively) in cyclone concentrator 14, and the known concentration of glycol in the spent diluted deicing fluid feed. If the concentration falls below a predetermined or required level, the flow in outflow conduit 58 is reduced or interrupted and the concentrated deicer fluid of an unacceptable concentration is returned to inlet port 34 of plate heat exchanger 12 via recycling outlet port 48 of cyclone concentrator 14 and recycling conduit 56 whereby the concentration of the glycol in the deicer fluid may be raised to an acceptable level.

Likewise the level of glycol in the steam condensate in line 60 and in steam recycle conduit 142 may be monitored. If the content of glycol in the steam condensate being withdrawn from compressor 74 and in conduit 142 is significant, the recycling along distillate conduit 60 to enter the cyclone concentrator 14 at inlet port 50 is continued whereby the glycol may be recovered in cyclone concentrator 14. If the concentration of glycol in the steam condensate in distillate line 60 is insignificant, the flow into cyclone concentrator 14 along distillate line 60 may be discontinued or reduced and the condensate drained at drain 92 or 93; and the flow along conduit 142 may be discontinued or reduced by valve 150.

The condensed steam formed in flow passage 32 as a result of the heat exchange, is typically at a temperature of 109°C and flows from outlet port 40 and along conduits 126 and 128 to enter distillate tank 20 at inlet port 130. The electric heater 28 between conduits 126 and 128 may be employed to further heat the steam condensate where necessary. The steam condensate in distillate tank 20 exits at outlet port 132 and is pumped by pump 170 along line 134 to feed conduit 116 and hot distillate line 90 as required. Line 134 includes a valve 148 to regulate the flow.

A level of distillation is maintained in distillate tank 20. Level switches designated LS provide information as to the level of distillate in tank 20 and the valve 148 and pump 170 are controlled or operated accordingly.

The distillate or steam condensate in conduit 116 flows to inlet port 104 of outer annular conduit 96 of preheating heat exchanger 18 and flows along annular conduit 96 in countercurrent flow with the dilute spent deicing fluid flowing in intermediate annular conduit 98, where the heat of the steam condensate is employed to preheat the dilute spent deicer fluid.

The steam condensate exits preheating heat exchanger 18 at outlet port 106 and flows along conduit 118 to rejoin the condensate in conduit 126. A portion of the condensate may flow along branch line 112 from conduit 118 to sewer 120.

At the start up electrical heater 28 is employed to develop a required temperature for the steam condensate employed in the preheating exchanger 18 and the hot distillate in hot distillate line 90, heat of which is also employed to heat steam withdrawn from cyclone concentrator 14 along steam line 54 and to supplement the steam content fed to compressor assembly 16.

After the required temperatures have been established, the electrical heater 28 may be turned off. Thereafter the system operates without the need for heat input by developing fresh compressed steam for plate heat exchanger 12 in the compressor assembly 16 from the steam vapor withdrawn from the cyclone concentrator 14. The preheating heat exchanger 18 also maximizes the efficient use of heat developed within the system.

At the start-up the system passes through a fill-in heat-up cycle for a period prior to the intended operation. In this stage the compressor assembly 16 is dormant. When the temperature in the cyclone concentrator 14 is close to the required operation temperature, the compressor assembly 16 is brought into operation and the cycle commences.

It is important to drain accumulated condensate from the compressor assembly 16 at the drains 92 periodically and especially prior to operation of the compressor assembly 16.

The operation of the compressors 62, 68 and 74 is controlled so that each operates at a speed to maintain a desired differential set point. During normal operation with all three compressors 62, 68 and 74 set to run at the same percent speed, it is normal for a particular blower to run at a higher temperature and with a higher current draw than a preceding compressor. In order to achieve a more balanced load on the three compressors 62, 68 and 74, it is found appropriate to operate the compressors so that they run at slightly different speeds while still maintaining the set point. Thus, by way of example, compressor 62 may be set to run at 100% speed, compressor 68 at 95% speed and compressor 74 at 90% speed. This tends to balance the load between the compressors. Observation and experience dictates the most appropriate settings to use under different operating circumstances.

The function of different valves and pumps and drains in the system will be apparent from the foregoing description even if not precisely indicated.

The vent line 164 has a condenser which minimizes the venting of steam and odors.

The apparatus 10 and the process of the invention permit efficient recovery of deicer fluid from a spent deicer fluid diluted with water as recovered from the tarmac where aircraft deicing is carried out. The apparatus and process thus provide environmental advantages in that the organic liquid component of the deicing fluid is recovered rather than discharged as waste, while at the same time the recovery is energy efficient. Furthermore, the water recovered from the dilute spent deicing fluid after being employed as compressed steam in plate heat exchanger 12, is removed from the system and has a low content of glycol and may be fed into municipal sewers without causing environmental problems.

In particular the apparatus 10 of the invention is capable of processing 1,000 litres per hour of dilute spent aircraft deicing fluid having a glycol concentration of about 10%, by weight, to produce an aqueous solution of the glycol at a concentration of glycol of about 50%, by weight, and clean water containing less than 1%, by weight, of glycol.

The apparatus 10 is designed for withdrawal of ADF concentrate automatically along outflow conduit 58 when the desired concentration is reached. Monitoring of pressure and temperature in the cyclone concentrator 14 provides an evaluation of the concentration of the ADF at the bottom of cyclone concentrator 14 on an ongoing basis.

Suitably the system is operated so that valve 148 in line 134 provides a flow rate of 1 litre/min. to 1 to 1.5 litres/min, above the target flow rate. Operating in this way the system will occasionally go into a recirculation mode to maintain an adequate level of distillate or condensed steam in distillate tank 20. If the level of distillate in distillate tank 20 is high, flow of distillate from tank 20 is increased in line 134 by adjustment of valve 148.

The concentrate flow adjusting valve 152 is set as soon as the desired concentration of ADF is achieved. The concentration is tested regularly as by monitor 174 to confirm that the desired concentration is maintained.

Thus if the concentration is too low the flow of concentrate in line 58 is reduced with valve 152 and the ADF of insufficient glycol concentration returned to line recycle conduit 56 via branch line 162, with flow also being directed from concentrator 14 through recycle port 48 to recycle conduit 56 and thence to plate heat exchanger 12.

If the concentration of the ADF in line 58 is too high the flow rate is increased until the desired concentration is achieved.

In Fig. 1 temperature transmitters are identified as TT, temperature indicators by TI, pressure transmitters by PT and pressure indicators by PI; H identifies heaters; APT identifies an absolute pressure transmitter, PS identifies a pressure switch, LS identifies the level switch; and FT identifies flow transmitters.

As indicated hereinbefore, while the invention has been described by reference to an especially important embodiment in which diluent water is removed from spent deicing fluid, the method and apparatus may also be applied to other aqueous fluid mixture, where water is to be removed; by way of example there may be mentioned desalination of salt water, removal of water from a contaminated ground water and removal of water from aqueous industrial effluent.

In the important embodiment in which water is removed from spent deicing fluid the resulting fluid may be re-used as deicing fluid or for other purposes, for example, anti-freeze.

## Claims

1. A method of removing diluent water from a spent deicing fluid to provide a re-usable deicing fluid wherein:
a) a spent deicing fluid mixture comprising 5 to 20%, by weight, of a deicing glycol and 80 to 95%, by weight, of water, is heated indirectly (12) with steam in a heating chamber to produce a hot frothing mass of hot liquid and steam vapor phases, said hot liquid phase containing bubbles of steam vapor, at a first pressure,
b) feeding the hot frothing mass from said heating chamber to a separating chamber of a cyclone and separating said steam vapor phase and said bubbles of steam vapor of said hot liquid phase, cyclonically from said hot frothing mass in said separating chamber of said cyclone (14), at said first pressure with formation of a discrete hot liquid phase and a discrete steam vapor phase,
c) recovering said discrete steam vapor phase from said cyclone and compressing said steam vapor phase in at least one compression stage (16) to develop a hot compressed steam at a second pressure,
d) recycling said hot compressed steam for the indirect heating (12) of spent deicing fluid in (a),
e) recovering said discrete hot liquid phase from said cyclone,
f) monitoring the concentration of deicing glycol in said hot liquid phase recovered from the cyclonic separation (14) in (e) and recovering a re-usable deicing fluid having a concentration of deicing glycol of 40 to 50%, by weight, and a concentration of water of 50 to 60%, by weight.

2. A method according to claim 1, **characterized in that** said deicing glycol is selected from ethylene glycol or propylene glycol.

3. A method according to claim 1 or 2, **characterized in that** said first pressure is at least 34.47 n/m² (5 psi) below said second pressure.

4. A method according to claim 1, 2 or 3, **characterized in that** said first pressure is 75.84x10³ to 203.42x10³ N/m² (11 to 15 psia) and said second pressure is 110.31x10³ to 137.89x10³ N/m² (16 to 20 psia).

5. A method according to claim 1, 2, 3 or 4, **characterized in that** hot distillate water (88) is fed to said at least one compression stage (16) to desuperheat said hot compressed steam.

6. A method according to claim 1, **characterized in that** there is included a step of recovering a hot steam condensate derived from said hot steam employed for the indirect heating (12), and preheating (18) said spent deicing fluid containing diluent water prior to said indirect heating (12) in a) with said hot steam condensate.

7. A method according to claim 6, **characterized in that** said preheating (18) further includes a preheating of said spent deicing fluid containing diluent water prior to said indirect heating (12) with hot liquid deicing fluid of said phase recovered from the cyclonic separation (14).

8. A method according to claim 7, **characterized in that** said indirect heating is carried out in a plate heat exchanger (12) and said preheating prior to said indirect heating is carried out in a heat exchanger (18) providing countercurrent flow of the spent deicing fluid containing diluent water relative to flows of said hot steam condensate and said hot liquid deicing fluid.

9. A method according to claim 8, **characterized in that** said spent deicing fluid containing diluent water is filtered (26) prior to said preheating (18).

10. A method according to claim 1 or 8, **characterized in that** said monitoring in (f) includes a step of:
(g) recycling the recovered hot liquid phase to step (a) until the concentration of 40 to 50%, by weight, of deicing glycol is achieved in the hot liquid phase recovered in step (e).

11. A method according to claim 10, **characterized in that** in step (a) said hot frothing mass is produced above a hot liquid phase of said spent deicing fluid containing diluent water, said hot frothing mass and said hot liquid phase containing the same relative proportions of glycol and water, in liquid or vapor form; and **in that** said hot liquid phase is continuously replenished by a feed of the spent deicing fluid from said preheating, as said hot frothing mass is fed to said separating chamber of said cyclone (14).

12. Apparatus (10) for removing diluent water from spent deicing fluid to provide a re-usable deicing fluid, the apparatus comprising:
(a) a heat exchanger (12) having a first flow passage (30)therethrough for flow of a spent deicing fluid containing a deicing glycol and diluent water, said first passage (30) being in heat exchange relationship with a second flow passage (32) for steam, said first passage (30) having an inlet port (34) and an outlet port (36), and said second flow passage (32) having an inlet port (38) and an outlet port (40) ;
(b) a separating chamber with a liquid inlet port (42)and a first conduit (52) for liquid flow communication of said outlet port (36) of said first passage (30) with said inlet port 42);a steam outlet port (44) in said separating chamber and a liquid outlet port (46) communicating with said separating chamber;
(c) at least one compressor (62) for compressing steam having a steam inlet port (64) and a second conduit (54) for steam flow communication of said steam outlet port (44) with said steam inlet port (64) of said at least one compressor (62); a compressed steam outlet port (66) and a third conduit (84)for steam flow communication of said compressed steam outlet port (66) with said inlet port (38)of said second flow passage (32) of said heat exchanger(12)and means for monitoring the concentration of deicing glycol recovered from liquid outlet port (46);
said separating chamber being in a cyclone (14) for cyclonically separating a hot frothing mass of a hot liquid phase and a steam vapor phase with said hot liquid phase containing bubbles of steam vapor received from said first flow passage (30); and means for maintaining said first flow passage (30), said first conduit (52), said separating chamber and said steam outlet port (44) of said cyclone (14) at a pressure below the pressure within said second flow passage (32) of said heat exchanger (12), said at least one compressor (62) and said third conduit (84) .

13. Apparatus according to claim 12, further **characterized by** a recycling liquid outlet port (48) in said cyclone (14), and a fourth conduit (56) for liquid flow communication of said recycling liquid outlet port (48) of said cyclone (14) with said inlet port (34) of said first passage (30) of said heat exchanger (12).

14. Apparatus according to claim 12 or 13, further **characterized by** a distillate tank (20) for providing a source of hot distillate water, a distillate conduit means (126, 128) for liquid flow communication of said outlet port (40) of said second flow passage (32) of said heat exchanger (12) with an inlet port (130)of said distillate tank (20); and heating means (28) in said distillate conduit means (126, 128) for heating distillate water; said distillate tank (20) having an outlet port (132) for hot distillate water.

15. Apparatus according to claim 12, 13 or 14, further **characterized by** a preheating heat exchanger (18) having an intermediate annular passage (98) for flow of the aqueous fluid mixture containing diluent water, an outer annular passage (96) circumscribing said intermediate annular passage, and an inner passage (94) circumscribed by said intermediate annular passage (98); said outer (96) and inner (94) passages being in heat exchange relationship with said intermediate passage (98); and a fifth conduit (124) for liquid flow communication of said intermediate passage (98) with said inlet port (34) of said first passage of said heat exchanger (12).

16. Apparatus according to claim 15, further **characterized by** a sixth conduit (116) for liquid flow communication of said outlet port (132) of said distillate tank (20) with said outer passage (96) of said preheating heat exchanger (18), and a seventh conduit for liquid flow communication of said liquid outlet port (40) of said cyclone (14) with said inner passage (94) of said preheating heat exchanger (18).

17. Apparatus according to claim 16, further **characterized by** a desuperheating inlet port (86) in said at least one compressor (62) and an inlet line (88) for flow of hot distillate water to said desuperheating inlet port (86) for desuperheating compressed steam developed in said at least one compressor (62), said inlet line (88) being in liquid flow communication with said sixth conduit (116).

18. Apparatus according to claim 17, further **characterized by** a condensed water outlet port in said at least one compressor (62) and an eighth conduit (60) for liquid flow communication of said water outlet port with said cyclone (14) for recycling to said cyclone (14), water and organic liquid entrained by steam from said cyclone (14).

## Revendications

1. Procédé d'élimination de l'eau diluante d'un fluide de dégivrage usé pour obtenir un fluide de dégivrage réutilisable, comprenant les étapes suivantes :
a) un mélange fluide de dégivrage comprenant 5 à 20%, par poids, d'un glycol de dégivrage et 80 à 95%, par poids, d'eau, est chauffé indirectement (12) avec de la vapeur dans une chambre de chauffage pour produire une masse moussante chaude de phases de liquide chaud et de vapeur d'eau, ladite phase liquide chaude contenant des bulles de vapeur d'eau, à une première pression,
b) le transfert de la masse moussante chaude depuis ladite chambre de chauffage vers une chambre de séparation d'un cyclone et la séparation de la vapeur d'eau et desdites bulles de vapeur d'eau de ladite phase liquide chaude, de façon cyclonique, depuis ladite masse moussante chaude dans ladite chambre de séparation dudit cyclone (14), ladite chambre de séparation dudit cyclone, à ladite première pression avec formation d'une phase liquide chaude discrète et d'une phase vapeur d'eau discrète,
c) la récupération de ladite phase vapeur d'eau discrète depuis ledit cyclone et la compression de ladite phase vapeur d'eau dans au moins un étage de compression (16) pour développer une vapeur comprimée chaude à une seconde pression,
d) le recyclage de ladite vapeur comprimée chaude pour le chauffage indirect (12) du fluide de dégivrage usée en (a),
e) la récupération de ladite phase liquide chaude discrète depuis ledit cyclone,
f) la surveillance de la concentration de glycol de dégivrage dans ladite phase liquide chaude récupérée depuis la séparation cyclonique (14) en (e) et la récupération d'un fluide de dégivrage réutilisable ayant une concentration de glycol de dégivrage de 40 à 50%, par poids, et une concentration d'eau de 50 à 60%, par poids.

2. Procédé selon la revendication 1, **caractérisé en ce que** ledit glycol de dégivrage est sélectionné à partir d'éthylèneglycol et de propylèneglycol.

3. Procédé selon la revendication 1 ou 2, **caractérisé en ce que** ladite première pression est au moins inférieure de 34,47 n/m² (5 psi) à ladite seconde pression.

4. Procédé selon la revendication 1, 2 ou 3, **caractérisé en ce que** ladite première pression est de 75, 84x10³ à 103,42x10³ N/m² (11 à 15 psia) et que ladite seconde pression est de 110, 31x10³ à 137, 89x10³ N/m² (16 à 20 psia).

5. Procédé selon la revendication 1, 2, 3 ou 4, **caractérisé en ce qu'**une eau de distillat chaude (88) est transférée à l'au moins une étape de compression (16) pour éviter la surchauffe de la vapeur comprimée chaude.

6. Procédé selon la revendication 1, **caractérisé en ce qu'**est incluse une étape de récupération d'un condensat de vapeur chaude dérivé de ladite vapeur chaude employée pour le chauffage indirect (12), et de préchauffage (18) dudit fluide de dégivrage usé contenant de l'eau diluante avant ledit chauffage indirect (12) en a) avec ledit condensat de vapeur chaude.

7. Procédé selon la revendication 6, caractérisé en que ledit préchauffage (18) comprend également le préchauffage dudit fluide de dégivrage usé contenant de l'eau diluante avant ledit chauffage indirect (12), avec du fluide de dégivrage liquide chaud, de ladite phase récupérée depuis la séparation cyclonique (14).

8. Procédé selon la revendication 7, **caractérisé en ce que** ledit chauffage indirect est exécuté dans un échangeur thermique à plaque (12) et ledit préchauffage avant ledit chauffage indirect est exécuté dans un échangeur thermique (18) assurant un flux à contre-courant du fluide de dégivrage usé contenant de l'eau diluante par rapport aux flux dudit condensat de vapeur chaude et dudit fluide de dégivrage chaud.

9. Procédé selon la revendication 8, **caractérisé en ce que** ledit fluide de dégivrage usé contenant de l'eau diluante est filtré (26) avant ledit préchauffage (18).

10. Procédé selon la revendication 1 ou 8, **caractérisé en ce que** ladite surveillance en (f) comprend une étape de :
(g) recyclage de la phase liquide chaude récupérée vers l'étape (a) jusqu'à ce que la concentration de 40 à 50 %, par poids, du glycol de dégivrage soit atteinte dans la phase liquide chaude récupérée à l'étape (e).

11. Procédé selon la revendication 10, **caractérisé en ce qu'**à l'étape (a), ladite masse moussante chaude est produite au-dessus d'une phase liquide chaude dudit fluide de dégivrage usé contenant de l'eau diluante, ladite masse moussante chaude et ladite phase liquide chaude contenant les mêmes proportions relatives de glycol et d'eau, sous forme de vapeur ou de liquide, et **en ce que** ladite phase vapeur chaude est continuellement régénérée par un transfert dudit fluide de dégivrage usé depuis ledit préchauffage, lorsque ladite masse moussante chaude est transférée vers ladite chambre de séparation dudit cyclone (14).

12. Dispositif (10) d'élimination de l'eau diluante d'un fluide de dégivrage usé pour obtenir un fluide de dégivrage réutilisable, ce dispositif comprenant :
(a) un échangeur thermique (12) ayant un premier passage d'écoulement (30) le traversant pour l'écoulement d'un fluide de dégivrage usé contenant un glycol de dégivrage et de l'eau diluante, ledit premier passage (30) étant en relation d'échange thermique avec un second passage d'écoulement (32) de vapeur, ledit premier passage (30) ayant un orifice d'entrée (34) et un orifice de sortie (36), et ledit second passage d'écoulement (32) ayant un orifice d'entrée (38) et un orifice de sortie (40) ;
(b) une chambre de séparation avec un orifice d'entrée de liquide (42) et un premier conduit (52) pour la communication de l'écoulement de liquide dudit premier passage (30) avec ledit orifice d'entrée (42) ; un orifice de sortie de vapeur (44) dans ladite chambre de séparation et un port de sortie de liquide (46) communiquant avec ladite chambre de séparation ;
(c) au moins un compresseur (62) pour comprimer la vapeur ayant un orifice d'entrée de vapeur (64) et un second conduit (54) pour la communication de l'écoulement de vapeur dudit port de sortie de vapeur (44) avec ledit orifice d'entrée de vapeur (64) d'au moins un compresseur (62) ; un orifice de sortie de vapeur comprimée (66) et un troisième conduit (84) pour la communication de l'écoulement de vapeur dudit orifice de sortie de vapeur comprimée (66) avec ledit orifice d'entrée (38) dudit second passage d'écoulement (32) dudit échangeur thermique (12) et un moyen pour surveiller la concentration du glycol de dégivrage récupéré depuis l'orifice de sortie de liquide (46) ; ladite chambre de séparation étant dans un cyclone (14) pour séparer de façon cyclonique une masse moussante chaude d'une phase liquide chaude et une phase de vapeur d'eau, ladite phase liquide chaude contenant des bulles de vapeur d'eau reçues depuis ledit premier passage d'écoulement (30) ; et un moyen pour maintenir ledit premier passage d'écoulement (30), ledit premier conduit (52), ladite chambre de séparation et ledit orifice de sortie de vapeur (44) dudit cyclone (14) à une pression inférieure à la pression dans ledit second passage d'écoulement (32) dudit échangeur thermique (12), ledit au moins un compresseur (62) et ledit troisième conduit (84).

13. Dispositif selon la revendication 12, **caractérisé en outre par** un orifice de sortie de liquide de recyclage (48) dans ledit cyclone (14), et un quatrième conduit (56) pour la communication de l'écoulement de liquide dudit orifice de sortie de liquide de recyclage (48) dudit cyclone (14) avec ledit orifice d'entrée (34) dudit premier passage (30) dudit échangeur thermique (12).

14. Dispositif selon la revendication 12 ou 13, **caractérisé en outre par** un réservoir de distillat (20) pour fournir une source d'eau de distillat chaude, un moyen formant conduit de distillat (126, 128) pour la communication de l'écoulement de liquide dudit orifice de sortie (40) dudit second passage d'écoulement (32) dudit échangeur thermique (12) avec un orifice d'entrée (130) dudit réservoir de distillat (20) ; et un moyen de chauffage (28) dans ledit moyen formant conduit de distillat (126, 128) pour chauffer l'eau de distillat, ledit réservoir de distillat (20) ayant un orifice de sortie (132) de l'eau de distillat chaude.

15. Dispositif selon la revendication 12, 13 ou 14, **caractérisé en outre par** un échangeur thermique de préchauffage (18) ayant un passage annulaire intermédiaire (98) pour l'écoulement du mélange fluide aqueux contenant l'eau diluante, un passage annulaire de sortie (96) circonscrivant ledit passage annulaire intermédiaire, et un passage interne (94) circonscrit par ledit passage annulaire intermédiaire (98); lesdits passages externe (96) et interne (94) étant en relation d'échange thermique avec ledit passage intermédiaire (98); et un cinquième conduit (124) pour la communication de l'écoulement de liquide dudit passage intermédiaire (98) avec ledit orifice d'entrée (34) dudit premier passage dudit échangeur thermique (12).

16. Dispositif selon la revendication 15, **caractérisé en outre par** un sixième conduit (116) pour la communication de l'écoulement de liquide dudit orifice de sortie (132) dudit réservoir de distillat (20) avec ledit passage externe (96) dudit échangeur thermique de préchauffage (18), et un septième conduit pour la communication de l'écoulement de liquide dudit orifice de sortie de liquide (40) dudit cyclone (14) avec ledit passage interne (94) dudit échangeur thermique de préchauffage (18).

17. Dispositif selon la revendication 16, **caractérisé en outre par** un orifice de réduction de chaleur (86) dans ledit au moins un compresseur (62) et une conduite d'entrée (88) pour l'écoulement de l'eau de distillat chaude vers ledit orifice d'évitement de surchauffe (86) pour éviter la surchauffe du flux comprimé développé dons l'au moins un compresseur (62), ladite conduite d'entrée (88) étant en communication d'écoulement liquide avec ledit sixième conduit (116).

18. Dispositif selon la revendication 17, **caractérisé en outre par** un orifice de sortie d'eau condensée dans ledit au moins un compresseur (62) et un huitième conduit (60) pour la communication de l'écoulement de liquide dudit orifice de sortie d'eau avec ledit cyclone (14) pour recycler vers ledit cyclone l'eau et le liquide organique entraînés par la valeur issue dudit cyclone (14).

## Patentansprüche

1. Verfahren zum Entfernen von Verdünnungswasser aus einem verbrauchten Enteisungsfluid, um ein wiederverwendbares Enteisungsfluid bereitzustellen, bei dem:
a) eine verbrauchte Enteisungsfluidmischung umfassend 5 bis 20% Gewichtsanteil eines Enteisungsglykols und 80 bis 95% Gewichtsanteil Wasser durch Dampf in einer Heizkammer indirekt erhitzt (12) wird zum Erzeugen einer heißen schäumenden Menge aus einer heißen flüssigen und einer Wasserdampf-Phase, wobei die heiße flüssige Phase Wasserdampfblasen enthält, bei einem ersten Druck,
b) die heiße schäumende Menge aus der Heizkammer in eine Trennkammer eines Zyldons eingespeist wird und die Wasserdampf-Phase und die Wasserdampfblasen der heißen flüssigen Phase in der Trennkammer des Zyklons (14) zyklonisch aus der heißen schäumenden Menge abgeschieden werden, bei dem ersten Druck unter Bildung einer diskreten heißen flüssigen Phase und einer diskreten Wasserdampf-Phase,
c) die diskrete Wasserdampf-Phase aus dem Zyklon rückgewonnen wird und die Wasserdampf-Phase in mindestens einer Kompressionsstufe (16) komprimiert wird, um heißen komprimierten Dampf bei einem zweiten Druck zu erzeugen,
d) der heiße komprimierte Dampf zum indirekten Heizen (12) von verbrauchtem Enteisungsfluid in a) regeneriert wird,
e) die heiße flüssige Phase aus dem Zyklon rückgewonnen wird,
f) die Konzentration von Enteisungsglykol in der heißen flüssigen Phase, die aus der zyklonischen Trennung (14) in (e) rückgewonnen wird, überwacht wird und ein wiederverwendbares Enteisungsfluid rückgewonnen wird, das eine Konzentration von Enteisungsglykol von 40 bis 50% Gewichtsanteil und eine Konzentration von Wasser von 50 bis 60% Gewichtsanteil besitzt.

2. Verfahren nach Anspruch 1, **dadurch gekennzeichnet, dass** das Enteisungsglykol aus Ethylenglykol oder Propylenglykol ausgewählt ist.

3. Verfahren nach Anspruch 1 oder 2, **dadurch gekennzeichnet, dass** der erste Druck mindestens 34,47 N/m² (5 psi) niedriger als der zweite Druck ist.

4. Verfahren nach Anspruch 1, 2 oder 3, **dadurch gekennzeichnet, dass** der erste Druck 75,84x10³ bis 103,42x10³ N/m² (11 bis 15 psia) beträgt und der zweite Druck 110,31x10³ bis 137,89x10³ N/m² (16 bis 20 psia) beträgt.

5. Verfahren nach Anspruch 1, 2, 3 oder 4, **dadurch gekennzeichnet, dass** heißes destilliertes Wasser (88) mindestens einer Kompressionsstufe (16) zugeführt wird zum Abführen der Überhitzungswärme des heißen komprimierten Dampfs.

6. Verfahren nach Anspruch 1, **dadurch gekennzeichnet, dass** ein Schritt enthalten ist, bei dem ein heißes Dampfkondensat rückgewonnen wird, das aus dem zum indirekten Heizen (12) benutzten heißen Dampf gewonnen wird, und dass das Verdünnungswasser enthaltende verbrauchte Enteisungsfluid vor dem indirekten Heizen (12) in a) durch das heiße Dampfkondensat vorgeheizt (18) wird.

7. Verfahren nach Anspruch 6, **dadurch gekennzeichnet, dass** das Vorheizen (18) ferner vor dem indirekten Heizen (12) ein Vorheizen des Verdünnungswasser enthaltenden verbrauchten Enteisungsfluids mit heißem flüssigen Enteisungsfluid aus der von der zyklonischen Trennung (14) rückgewonnenen Phase enthält

8. Verfahren nach Anspruch 7, **dadurch gekennzeichnet, dass** das indirekte Heizen in einem Plattenwärmetauscher (12) durchgeführt wird, und dass das Vorheizen vor dem indirekten Heizen in einem Wärmetauscher (18) durchgeführt wird, der Gegenströmungsdurchfluss des Verdünnungswasser enthaltenden verbrauchten Enteisungsfluids relativ zu Durchflüssen des heißen Dampfkondensats und des heißen flüssigen Enteisungsfluids vorsieht.

9. Verfahren nach Anspruch 8, **dadurch gekennzeichnet, dass** das Verdünnungswasser enthaltende verbrauchte Enteisungsfluid vor dem Vorheizen (18) gefiltert (26) wird.

10. Verfahren nach Anspruch 1 oder 8, **dadurch gekennzeichnet dass** die Überwachung in (f) einen Schritt enthält, bei dem:
(g) die heiße flüssige Phase zu Schritt a) regeneriert wird, bis die Konzentration von 40 bis 50% Gewichtsanteil von Enteisungsglykol in der heißen flüssigen Phase, die in Schritt e) rückgewonnen wird, erreicht ist.

11. Verfahren nach Anspruch 10, **dadurch gekennzeichnet, dass** in Schritt a) die heiße schäumende Menge über einer heißen flüssigen Phase des Verdünnungswasser enthaltenden verbrauchten Enteisungsfluids erzeugt wird, wobei die heiße schäumende Menge und die heiße flüssige Phase die gleichen relativen Anteile von Glykol und Wasser, in flüssiger oder gasförmiger Form, enthalten; und dass die heiße flüssige Phase kontinuierlich durch eine Zufuhr des verbrauchten Enteisungsfluids von der Vorheizung aufgefüllt wird, während die heiße schäumende Menge in die Trennkammer des Zyklons (14) eingespeist wird.

12. Vorrichtung (10) zum Entfernen von Verdünnungswasser aus verbrauchtem Enteisungsfluid, um ein wiederverwendbares Enteisungsfluid bereitzustellen, wobei die Vorrichtung umfasst:
(a) einen Wärmetauscher (12), der einen ersten Durchflussdurchgang (30) durch den Wärmetauscher (12) zum Durchfluss eines verbrauchten Enteisungsfluids, das einen Enteisungsglykol und Verdünnungswasser enthält, besitzt, wobei der erste Durchgang (30) in Wärmeaustauschbeziehung mit einem zweiten Durchflussdurchgang (32) für Dampf steht, wobei der erste Durchgang (30) einen Einlassanschluss (34) und einen Auslassanschluss (36) besitzt, und der zweite Durchgang (32) einen Einlassanschluss (38) und einen Auslassanschluss (40) besitzt;
(b) eine Trennkammer mit einem Flüssigkeitseinlassanschluss (42) und einer ersten Leitung (52) zur Flüssigkeitsdurchflussverbindung des Auslassanschlusses (36) des ersten Durchgangs (30) mit dem Einlassanschluss (42); einen Dampfauslassanschluss (44) in der Trennkammer und einen Flüssigkeitsauslassanschluss (46), der mit der Trennkammer in Verbindung steht;
(c) mindestens einen Kompressor (62) zum Komprimieren von Dampf, der einen Dampfeinlassanschluss (64) und eine zweite Leitung (54) zur Dampfdurchflussverbindung des Dampfauslassanschlusses (44) mit dem Dampfeinlassanschluss (64) des mindestens einen Kompressors (62) besitzt; einen Auslassanschluss (66) für komprimierten Dampf und eine dritte Leitung (84) zur Dampfdurchflussverbindung des Auslassanschlusses (66) für komprimierten Dampf mit dem Einlassanschluss (38) des zweiten Durchflussdurchgangs (32) des Wärmetauschers (12) und Mittel zur Überwachung der Konzentration des Enteisungsglykols, das vom Flüssigkeitsauslassanschluss (46) rückgewonnen wird;
wobei sich die Trennkammer in einem Zyklon (14) befindet, um zyklonisch eine aus dem ersten Durchflussdurchgang (30) erhaltene heiße schäumende Menge einer heißen flüssigen Phase und einer Wasserdampf-Phase zu trennen, wobei die heiße flüssige Phase Wasserdampfblasen enthält; und Mittel zum Halten des ersten Durchflussdurchgangs (30), der ersten Leitung (52), der Trennkammer und des Dampfauslassanschlusses (44) des Zyklons (14) auf einem Druck, der niedriger als der Druck in dem zweiten Durchflussdurchgang (32) des Wärmetauschers (12), dem mindestens einen Kompressor (62) und der dritten Leitung (84) ist.

13. Vorrichtung nach Anspruch 12, weiterhin **gekennzeichnet durch** einen Regenerierungsflüssigkeitsauslassanschluss (48) in dem Zyklon (14), und einer vierten Leitung (56) zur Flüssigkeitsdurchflussverbindung des Regenerierungsflüssigkeitsauslassanschlusses (48) des Zyklons (14) mit dem Einlassanschluss (34) des ersten Durchgangs (30) des Wärmetauschers (12).

14. Vorrichtung nach Anspruch 12 oder 13, weiterhin **gekennzeichnet durch** einen Destillatbehälter (20) zum Bereitstellen einer Quelle von heißem destillierten Wasser, ein Destillatleitungsmittel (126, 128) zur Flüssigkeitsdurchflussverbindung des Auslassanschlusses (40) des zweiten Durchflussdurchgangs (32) des Wärmetauschers (12) mit einem Einlassanschluss (130) des Destillatbehälters (20); und **durch** Heizmittel (28) in dem Destillatleitungsmittel (126, 128) zum Heizen von destilliertem Wasser, wobei der Destillatbehälter (20) einen Auslassanschluss (132) für heißes destilliertes Wasser besitzt.

15. Vorrichtung nach Anspruch 12, 13 oder 14, weiterhin **gekennzeichnet durch** einen Vorheiz-Wärmetauscher (18) mit einem zwischenliegenden ringförmigen Durchgang (98) zum Durchfluss der Verdünnungswasser enthaltenden wässrigen Flüssigkeitsmischung, einem äußeren ringförmigen Durchgang (96), der den zwischenliegenden ringförmigen Durchgang umgibt, und einem inneren Durchgang (94), den der zwischenliegende ringförmige Durchgang (98) umgibt; wobei der äußere (96) und der innere (94) Durchgang in Wärmeaustauschbeziehung mit dem zwischenliegenden Durchgang (98) sind; und **durch** eine fünfte Leitung (124) zur Flüssigkeitsdurchflussverbindung des zwischenliegenden Durchgangs (98) mit dem Einlassanschluss (34) des ersten Durchgangs des Wärmetauschers (12).

16. Vorrichtung nach Anspruch 15, weiter **gekennzeichnet durch** eine sechste Leitung (116) zur Flüssigkeitsdurchflussverbindung des Auslassanschlusses (132) des Destillatbehälters (20) mit dem äußeren Durchgang (96) des Vorheiz-Wärmetauschers (18), und eine siebte Leitung zur Flüssigkeitsdurchflussverbindung des Flüssigkeitsauslassanschlusses (40) des Zyklons (14) mit dem inneren Durchgang (94) des Vorheiz-Wärmetauschers (18).

17. Vorrichtung nach Anspruch 16, weiter **gekennzeichnet durch** einen Überhitzungswärme-Abfuhr-Einlassanschluss (86) in dem mindestens einen Kompressor (62) und eine Einlassleitung (88) zum Durchfluss von heißem destillierten Wasser zu dem Überhitzungswärme-Abfuhr-Einlassanschluss (86) zum Abführen von Überhitzungswärme bei komprimiertem Dampf, der in dem mindestens einen Kompressor (62) erzeugt wird, wobei die Einlassleitung (88) in Flüssigkeitsdurchflussverbindung mit der sechsten Leitung (116) steht.

18. Vorrichtung nach Anspruch 17, weiter **gekennzeichnet durch** einen Kondenswasseraustassanschluss in dem mindestens einen Kompressor (62) und eine achte Leitung (60) zur Flüssigkeitsdurchflussverbindung des Wasserauslassanschlusses mit dem Zyklon (14), um zu dem Zyklon Wasser und organisches Fluid rückzuführen, die vom Dampf aus dem Zyklon (14) mitgerissen wurden.
